# EUROPEAN PATENT APPLICATION

(11) **EP 4 685 597 A1**
(43) Date of publication of application: **28.01.2026**
(21) Application number: 25183411.5
(22) Date of filing: 17.06.2025
(51) Int. Cl.: G05D 1/227, G05D 109/20, G08C 17/00, H04W 12/00

(54) **ADAPTIVE ALLOCATION OF FUNCTION CONTROL AUTHORITY FOR AN UNCREWED AIRCRAFT BASED ON DATA LINK CONDITION**

(30) Priority: 23.07.2024 US 202418780755
(71) Applicant: The Boeing Company, Arlington, VA 22202 (US)
(72) Inventor: WILLIAMS, Brendan Patrick, Arlington, 22202 (US); MCDONALD, Casey, Arlington, 22202 (US); COX, Kelly Maree, Arlington, 22202 (US); QUAGLIATINI, Damian, Arlington, 22202 (US); CLOTHIER, Reece Alexander, Arlington, 22202 (US); LAMBETH, Daniel Hamish, Arlington, 22202 (US); CORNISH, Lionel Bruce, Arlington, 22202 (US)
(74) Representative: Boult Wade Tennant LLP

(57) **Abstract**

Techniques for operating a semi-autonomous aircraft according to a condition of a data communication channel include: detecting a condition of a data communication channel between a semi-autonomous aircraft and a ground pilot station for the semi-autonomous aircraft; reallocating a control authority for an aircraft function from one of the semi-autonomous aircraft or the ground pilot station to an other of the semi-autonomous aircraft or the ground pilot station, where the reallocating is performed automatically and in response to a fulfilment of predefined criteria comprising the condition of the data communication channel; obtaining, from the other of the semi-autonomous aircraft or the ground pilot station, an instruction to activate or deactivate the aircraft function; and executing, by the semi-autonomous aircraft, the instruction to activate or deactivate the aircraft function in response to the obtaining the instruction.

## Description

### Field

This disclosure relates generally to uncrewed aircraft and the operation thereof.

### Background

Semi-autonomous aircraft may be controlled by pilots situated remotely at ground control stations / remote pilot stations (collectively referred to herein as "ground pilot stations") and results/data/information/commands passed to the semi-autonomous aircraft via a wireless data link. When the data link is unavailable, the functions that are operated by remote pilots become unavailable to the aircraft.

There are also semi-autonomous aircraft functions that operate continuously by default. An example of such a function is a hard geofence, which activates flight termination when a geofence has been crossed.

Some functions of semi-autonomous aircraft may be performed by pilot control from a ground pilot station, or may be directed by the pilot at the ground pilot station to be autonomously performed by onboard systems. For example, for collision avoidance, a remote pilot may observe and control the semi-autonomous aircraft to avoid an airborne obstacle; alternatively, the semi-autonomous aircraft may be controlled by an onboard Detect And Avoid ("DAA") system. However, for a semi-autonomous aircraft to utilize its onboard DAA, a remote pilot must activate it using an operational data link.

### Summary

According to various examples, a method of operating a semi-autonomous aircraft according to a condition of a data communication channel is presented. The method includes: detecting a condition of a data communication channel between a semi-autonomous aircraft and a ground pilot station for the semi-autonomous aircraft; reallocating a control authority for an aircraft function from one of the semi-autonomous aircraft or the ground pilot station to an other of the semi-autonomous aircraft or the ground pilot station, wherein the reallocating is performed automatically and in response to a fulfilment of predefined criteria comprising the condition of the data communication channel; obtaining, from the other of the semi-autonomous aircraft or the ground pilot station, an instruction to activate or deactivate the aircraft function; and executing, by the semi-autonomous aircraft, the instruction to activate or deactivate the aircraft function in response to the obtaining the instruction.

Various optional features of the above method examples include the following. The reallocating may include reallocating the control authority from the ground pilot station to the semi-autonomous aircraft. The reallocating may include reallocating, automatically and in response to the detecting, a plurality of control authorities for a corresponding plurality of aircraft functions from the one of the semi-autonomous aircraft or the ground pilot station to the other of the semi-autonomous aircraft or the ground pilot station. The condition of the data communication channel may include a change in operational status of the data communication channel. The change in operational status of the data communication channel may include a change in an amount of loss, corruption, or interruption of data sent over the data communication channel. The condition of the data communication channel may include a change in predicted operational status of the data communication channel. The change in operational status of the data communication channel may include a predicted change in an amount of loss, corruption, or interruption of data sent over the data communication channel. The aircraft function may include at least one of: a hard geofence, a soft geofence, an onboard detect and avoidance process, an onboard terrain avoidance process, an onboard weather avoidance process, an onboard risk reduction maneuver process, an onboard environmental control maneuver process, an onboard diversion process, an onboard emergency or precautionary landing process, establishing an alternate communication channel, establishing an alternate communication bearer, switching to an established alternate communication channel, switching to an established alternate communication bearer, a takeoff rejection process, or a missed approach process. The predefined criteria may include a specified phase of flight of the semi-autonomous aircraft. The predefined criteria may include a specified health status of a specified system of the semi-autonomous aircraft.

According to various examples, a system for operating a semi-autonomous aircraft according to a condition of a data communication channel is presented. The system includes: at least one non-transitory computer readable medium comprising instructions; and at least one electronic processor that executes the instructions to perform operations comprising: detecting a condition of a data communication channel between a semi-autonomous aircraft and a ground pilot station for the semi-autonomous aircraft; reallocating a control authority for an aircraft function from one of the semi-autonomous aircraft or the ground pilot station to an other of the semi-autonomous aircraft or the ground pilot station, wherein the reallocating is performed automatically and in response to a fulfilment of predefined criteria comprising the condition of the data communication channel; obtaining, from the other of the semi-autonomous aircraft or the ground pilot station, an instruction to activate or deactivate the aircraft function; and executing, by the semi-autonomous aircraft, the instruction to activate or deactivate the aircraft function in response to the obtaining the instruction.

Various optional features of the above system examples include the following. The reallocating may include reallocating the control authority from the ground pilot station to the semi-autonomous aircraft. The reallocating may include reallocating, automatically and in response to the detecting, a plurality of control authorities for a corresponding plurality of aircraft functions from the one of the semi-autonomous aircraft or the ground pilot station to the other of the semi-autonomous aircraft or the ground pilot station. The condition of the data communication channel may include a change in operational status of the data communication channel. The change in operational status of the data communication channel may include a change in an amount of loss, corruption, or interruption of data sent over the data communication channel. The condition of the data communication channel may include a change in predicted operational status of the data communication channel. The change in operational status of the data communication channel may include a predicted change in an amount of loss, corruption, or interruption of data sent over the data communication channel. The aircraft function may include at least one of: a hard geofence, a soft geofence, an onboard detect and avoidance process, an onboard terrain avoidance process, an onboard weather avoidance process, an onboard risk reduction maneuver process, an onboard environmental control maneuver process, an onboard diversion process, an onboard emergency or precautionary landing process, establishing an alternate communication channel, establishing an alternate communication bearer, switching to an established alternate communication channel, switching to an established alternate communication bearer, a takeoff rejection process, or a missed approach process. The predefined criteria may include a specified phase of flight of the semi-autonomous aircraft. The predefined criteria may include a specified health status of a specified system of the semi-autonomous aircraft.

Combinations, (including multiple dependent combinations) of the above-described elements and those within the specification have been contemplated by the inventors and may be made, except where otherwise indicated or where contradictory.

### Brief Description of the Drawings

Various features of the examples can be more fully appreciated, as the same become better understood with reference to the following detailed description of the examples when considered in connection with the accompanying figures, in which:
Fig. 1 is a schematic diagram of a system for adaptive allocation of control authority over an uncrewed aircraft function based on a data link condition;
Fig. 2 is a flow diagram for a method of operating a semi-autonomous aircraft according to a condition of a data communication channel; and
Fig. 3 is a schematic diagram showing uncrewed aircraft computer hardware and ground pilot station computer hardware.

### Description of the Examples

Reference will now be made in detail to examples, illustrated in the accompanying drawings. Wherever convenient, the same reference numbers will be used throughout the drawings to refer to the same or like parts. In the following description, reference is made to the accompanying drawings that form a part thereof, and in which is shown by way of illustration specific exemplary examples in which the examples may be practiced. These examples are described in sufficient detail to enable those skilled in the art to practice the examples and it is to be understood that other examples may be utilized and that changes may be made without departing from the scope of the disclosure. The following description is, therefore, merely exemplary.

Currently, a given semi-autonomous aircraft function is either controlled and performed by the ground pilot station or controlled and performed by systems that are on board the aircraft, regardless of the state of the data link between the semi-autonomous aircraft and ground pilot station. This arrangement creates two kinds of hazards. First, remotely-controlled functions are lost when the data link is unavailable. If the semi-autonomous aircraft is reliant on remote pilot station control for a particular function, then that function is unavailable when the data link is unavailable. Second, always-active onboard functions, such as hard geofencing, present a risk of being automatically but erroneously activated, which can have adverse consequences. However, such always-active onboard functions may be unnecessary in the presence of an operational data link.

Further, currently, some semi-autonomous aircraft may be hard-coded to automatically activate a lost link route when the data link is unavailable. However, such activation is statically assigned and performed automatically. There is no ability to activate or deactivate the lost link route functionality. For example, control over the lost link route function rests only on board the semi-autonomous aircraft; control authority over the lost link route function cannot be assigned to the ground pilot station by existing systems.

Some examples facilitate a transition from remotely piloted aircraft to higher modes of autonomy by reallocating control over certain functions to the aircraft when the data link is unavailable, where they can be executed without human supervision. Some examples provide that control authority over some functions may transition to a pilot or algorithm at the remote pilot station when the data link is available and then transition to the aircraft in the event of data link loss, corruption, interruption, or unavailability, or predicted loss, corruption, interruption, or unavailability. Thus, some examples solve the problems of the hazards that arise from always-on/always-off semi-autonomous aircraft functionality.

Some examples formalize the automatic transition and activation of various functions in an end-to-end semi-autonomous aircraft system, e.g., to address operational risk. According to some examples, if the ground pilot system has a reduced or absent ability to intervene and activate a specified function on the aircraft, then the control authority over the function transfers to the aircraft. The control authority transfer may be caveated by one or more of: the phase of flight, indications of human inattention, and/or the health of particular aircraft systems. Some examples take a system-level view to provide formality and structure around the implementation. Some examples are based on operational risk assessment and analysis to identify which functions should have their control authority transition, and if any constraints or associated hazards are to be considered.

These and other features and advantages are shown and described herein in reference to the accompanying figures.

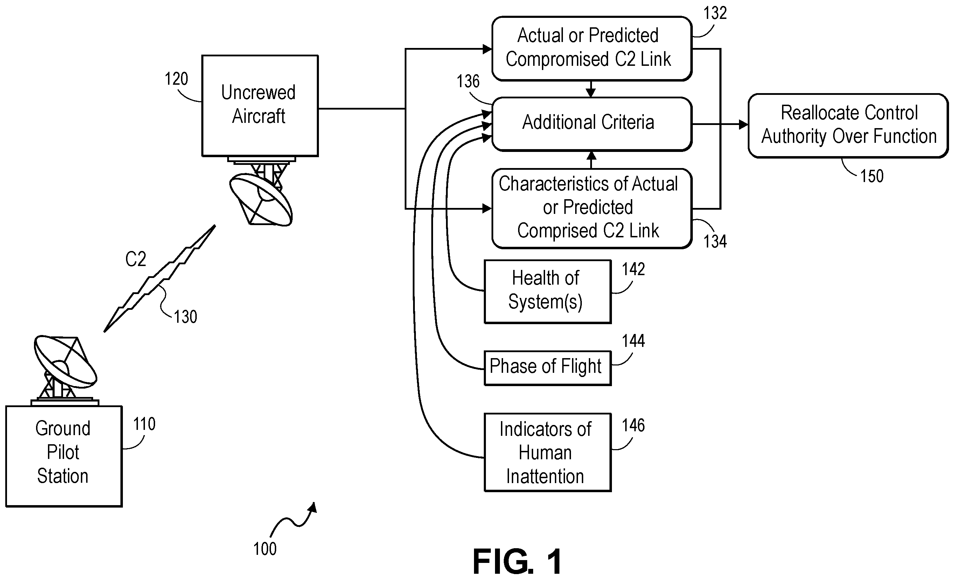

Fig. 1 is a schematic diagram of a system 100 for adaptive allocation of control authority over a function of an uncrewed aircraft 120 based on a condition of a data link 130. The uncrewed aircraft 120 may be a semi-autonomous aircraft as described herein, for example. By way of non-limiting example, the uncrewed aircraft may be an electric vertical takeoff and landing (eVTOL) aircraft (e.g., an Advanced Air Mobility (AAM) aircraft), a powered lift aircraft, a fixed-wing aircraft, a rotary-wing aircraft, of a different type of aircraft.

The system 100 includes a ground pilot station 110, which is remotely-located from the uncrewed aircraft 120. The ground pilot station 110 may be a Ground Control Station (GCS) or Remote Pilot Station (RPS). The ground pilot station 110 may house a pilot and/or one or more computers capable of directing at least some functions of the uncrewed aircraft 120.

The system 100 includes a wireless data link 130 between the uncrewed aircraft 120 the ground pilot station 110. The data link 130 may be a command and control (C2) radio frequency communication channel, for example. The data link 130 may convey data between computer systems only, e.g., the data link 130 may not convey voice communications between people.

For any of a variety of reasons, the data link 130 may become compromised (e.g., data link loss, corruption, interruption, or unavailability), such that it has a reduced or absent ability to send data between the uncrewed aircraft 120 and the ground pilot station 110. Various reasons include, by way of non-limiting example, certain atmospheric conditions, topographical obstructions (e.g., mountains), unfavorable orientation of the antenna of the uncrewed aircraft 120 relative to the antenna used by the ground pilot station 110, interference, jamming, distance, signal fading, etc. Some or all of these reasons may be predicted, and hence the resulting data link compromise (e.g., data link loss, corruption, interruption, or unavailability) may accordingly be predicted.

Some examples detect an actual or predicted compromised data link 132 and use the detection to reallocate control authority 150 over one or more aircraft functions as described herein. The reallocation of control authority over one or more aircraft function may be from the uncrewed aircraft 120 to the ground pilot station 110 or may be from the ground pilot station 110 to the uncrewed aircraft 120. The decision as to whether to reallocate control authority 150 may take into account a condition of a data link between the uncrewed aircraft 120 and the ground pilot station 110, where the condition may include not only an actual or predicted compromised data link 132, but also characteristics of the actual or predicted compromised data link 134 and/or additional criteria 136.

Characteristics of the actual or predicted compromised data link 134 that may be taken into account include, by way of non-limiting example, any, or a combination, of: a duration of the actual or predicted compromised data link 132, a periodicity of the actual or predicted compromised data link 132, whether the actual or predicted compromised data link 132 is intermittent or continuous, whether a carrier signal is present or absent (with limited or no data exchanged), whether alternative communications bearers are available, and/or whether fading of the actual or predicted compromised data link 132 is continuous, intermittent, or periodic.

Additional criteria 136 that may be taken into account include, by way of non-limiting example, one or more of: the health of one or more systems 142 of the uncrewed aircraft 120, the phase of flight 144 of the uncrewed aircraft 120, and/or one or more indicators of human inattention 146.

The health of one or more systems 142 may include the operational status (e.g., operational, not operational, capacity level, etc.) of any of a variety of aircraft systems, including, by way of non-limiting example: battery (where the operational status is indicative of battery level), flight control actuator (where the operational status is indicative of whether the flight control actuator is fully functional, partially functional, not functional, predicted to be partially functional, or predicted to be not functional), or any of a variety of other systems (where the operational status is indicative of operational ability, overheating, etc.).

The phase of flight 144 of the uncrewed aircraft 120 may include an indication of whether the uncrewed aircraft 120 is any of, by way of non-limiting example: on the ground, takeoff run, in terminal area, enroute, approach, above/below decision altitude, landing, etc.

The one or more indicators of human inattention 146 may include indicators of whether or not the ground pilot station 110 has issued any commands within a recent temporal window, and/or whether the ground pilot station has issued a particular expected command during a recent temporal window. Note that human inattention features according to some examples may be applied to conventional crewed aircraft.

Thus, any, or a combination, of an actual or predicted compromised data link 132, characteristics of the actual or predicted compromised data link 134, and/or additional criteria 136 may be automatically processed, e.g., using one or more logical decision trees, for a determination as to whether to reallocate control authority 150 over one or more functions of the uncrewed aircraft 120. The automatic processing may be performed on board the uncrewed aircraft 120, at the ground pilot station 110, a combination of both, or individually at both.

Non-limiting example functions of the uncrewed aircraft 120 that may have their control authority reallocated include, by way of non-limiting example: a hard geofence, a soft geofence, an onboard detect and avoidance process, an onboard terrain avoidance process, an onboard weather avoidance process, an onboard environmental control maneuver process, an onboard diversion process, an onboard emergency or precautionary landing process, establishing (without switching to) an alternate communication channel, establishing (without switching to) an alternate communication bearer, switching to an established alternate communication channel, switching to an established alternate communication bearer, a takeoff rejection process, a missed approach process, or an onboard risk reduction maneuver process.

The onboard risk reduction maneuver process can be any of a variety of risk reduction maneuver processes, including, by way of non-limiting example, an onboard mid-air collision risk reduction maneuver process, an onboard mid-air collision risk reduction track (path) following process, an onboard ground risk reduction maneuver process, or an onboard ground risk reduction track (path) following process.

As used herein, switching a communication channel refers to changing a frequency, for example, of a data communication, without changing the communication bearer. As used herein, switching a communication bearer refers to changing a mode of communications, e.g., changing from radio-frequency communication to photonic communication, changing a modulation technique, changing from digital to analog (or vice versa), etc. For example, changing a communication channel does not generally require use of different hardware for the communication, whereas changing a communication bearer may require changing to the use of different hardware.

Note that establishing an alternate communication channel or communication bearer may encompass actions short of using the alternate communication channel or communication bearer for actual data communication. For example, establishing an alternate communication channel or communication bearer may include actions such as configuring hardware and/or software, performing handshake protocol exchanges, and/or other actions that do not include use of the channel or bearer to send or receive information (except for information that is strictly required for its establishment). By contrast, switching to an established alternate communication channel or communication bearer for data communication includes using the alternate communication channel or communication bearer to send or receive information that is unrelated to its establishment.

Non-limiting examples of using one or more of an actual or predicted compromised data link 132, characteristics of the actual or predicted compromised data link 134, and/or additional criteria 136 to reallocate control authority 150 over one or more functions of the uncrewed aircraft 120 follow. Note that the actions described are performed automatically by systems at the uncrewed aircraft and/or systems at the ground pilot station 110.
(1) If the data link 130 has increasing packet loss performance or the predicted availability indicates high likelihood of data link loss, then reallocate control authority to the uncrewed aircraft 120 over: a boundary containment geofence (hard and soft), onboard avoidance maneuvering to ensure separation, and alternate communications channel switching. Activate, by way of one or more instructions from the uncrewed aircraft, the boundary containment geofence (hard and soft) and the onboard avoidance maneuvering to ensure separation. Hot switch, by way of one or more instructions from the uncrewed aircraft 120, to the alternate communications channel when the data link fails.
(2) If the data link 130 is active, the uncrewed aircraft 120 is passing decision altitude on landing approach, and there are indications of human inattention, then reallocate control authority to the uncrewed aircraft 120 over a missed approach process. Activate, by way of one or more instructions from the uncrewed aircraft 120, the missed approach process.
(3) If the quality of the data link 130 falls below a requirement, then reallocate control authority to the uncrewed aircraft 120 over alternate communications channel switching. Hot switch, by way of one or more instructions from the uncrewed aircraft 120, to the alternate communications channel.
(4) If the data link 130 fails or quality of data link falls below a requirement, then reallocate control authority to the uncrewed aircraft 120 over: onboard avoidance maneuvering to ensure separation, lost link flightpath, and alternate communication bearer switching. Activate, by way of one or more instructions from the uncrewed aircraft 120, the onboard avoidance maneuvering to ensure separation and the lost link flightpath. Hot switch, by way of one or more instructions from the uncrewed aircraft 120, to the alternate communication bearer.
(5) If a failed data link 130 is re-established, then reallocate control authority to the ground pilot station 110 over: a boundary containment geofence (hard and soft) and onboard avoidance maneuvering to ensure separation. Deactivate, by way of one or more instructions from the ground pilot station 110, the boundary containment geofence (hard and soft) and the onboard avoidance maneuvering to ensure separation (i.e., avoidance maneuvering initiated by remote pilot).
(6) If the data link 130 is active and the phase of flight is "approach," then reallocate control authority to the ground pilot station 110 over a boundary containment geofence (hard and soft). Deactivate, by way of one or more instructions from the ground control station 110, the boundary containment geofence (hard and soft)
(7) If the data link 130 has a latency above a predefined threshold, then reallocate control authority to the uncrewed aircraft 120 over onboard DAA capability. Activate, by way of one or more instructions from the uncrewed aircraft 120, the onboard DAA capability.
(8) If the data link 130 is lost, then reallocate control authority to the uncrewed aircraft 120 over onboard DAA capability. Activate, by way of one or more instructions from the uncrewed aircraft 120, the onboard DAA capability.
(9) If the data link 130 has intermittent drop-out, then reallocate control authority to the uncrewed aircraft 120 over a boundary containment geofence (hard and soft). Activate, by way of one or more instructions from the uncrewed aircraft, the boundary containment geofence (hard and soft).
(10) If the data link 130 has intermittent drop-out, then reallocate control authority to the uncrewed aircraft 120 over onboard DAA capability. Activate, by way of one or more instructions from the uncrewed aircraft 120, the onboard DAA capability.
(11) If the data link 130 has intermittent drop-out, then reallocate control authority to the uncrewed aircraft 120 over onboard terrain avoidance capability. Activate, by way of one or more instructions from the uncrewed aircraft 120, the onboard terrain avoidance capability.
(12) If the data link 130 the signal-to-noise ratio falls below a predefined threshold, then reallocate control authority to the uncrewed aircraft 120 over alternate communication bearer switching. Hot switch, by way of one or more instructions from the uncrewed aircraft 120, to the alternate communication bearer.
(13) If the data link 130 is lost and the phase of flight is enroute, then reallocate control authority to the uncrewed aircraft 120 over the flight plan. Activate, by way of one or more instructions from the uncrewed aircraft 120, the planned flight route.
(14) If the data link 130 is lost and the phase of flight is "in terminal area," then reallocate control authority to the uncrewed aircraft 120 over a minimum mid-air collision risk profile. Activate, by way of one or more instructions from the uncrewed aircraft 120, the minimum mid-air collision risk profile to exit the area.
(15) If the data link 130 is inactive and the phase of flight is "approach," then reallocate control authority to the uncrewed aircraft 120 over onboard continue recovery procedure and lost data link procedure. Activate, by way of one or more instructions from the uncrewed aircraft 120, the onboard continue recovery procedure. Deactivate, by way of one or more instructions from the uncrewed aircraft 120, the default onboard lost data link procedure.
(16) If the data link 130 is active and the performance of the onboard navigation system health is degraded, then reallocate control authority to the uncrewed aircraft 120 over a boundary containment geofence (hard and soft). Activate, by way of one or more instructions from the uncrewed aircraft 120, the boundary containment geofence.
(17) If the data link 130 is active and the health of the onboard flight control system indicates that one or more anomalies are present, then reallocate control authority to the uncrewed aircraft 120 over a boundary containment geofence (hard and soft). Activate, by way of one or more instructions from the uncrewed aircraft 120, the boundary containment geofence.
(18) If the data link 130 is active and the phase of flight is "takeoff run," then reallocate control authority to the uncrewed aircraft 120 over an onboard rejected takeoff process. If the airspeed is below a predefined threshold, then activate, by way of one or more instructions from the uncrewed aircraft 120, the rejected takeoff process.
(19) If the data link 130 is predicted to become inactive, corrupted, interrupted, or above an acceptable level of loss at a future time, then reallocate control authority to the uncrewed aircraft 120 over alternate communications channel switching and/or alternate communications bearer switching. Hot switch, by way of one or more instructions from the uncrewed aircraft 120, to the alternate communications channel/bearer. The hot switching may be implemented upon the data link becoming inactive, corrupted, interrupted, or above the acceptable level of loss. Alternately, the hot switching may be implemented in advance of the data link becoming inactive, corrupted, interrupted, or above the acceptable level of loss. For example, if the amount of time that it takes to complete the hot switching is known, then the hot switching may be implemented by at least that amount of time in advance of the data link becoming inactive, corrupted, interrupted, or above the acceptable level of loss. This pro-active response to the predicted state ensures that the alternate communications channel or bearer is available when required. Note that the actions of this example may be in addition to the reallocation of control authority to the uncrewed aircraft 120 over other functions (e.g., a boundary containment geofence (hard and soft) and/or onboard avoidance maneuvering to ensure separation) and may further include the activation, by way of one or more instructions from the uncrewed aircraft, of one or more of the other functions.
(20) If the data link 130 is active and either an onboard or a ground-based detect and avoid process indicates that traffic is within a first threshold time or distance, then reallocate control authority to both the uncrewed aircraft 120 and the ground pilot station 110 over an automated onboard avoidance maneuver. Once the traffic is within a second threshold (less than the first threshold) time or distance and no human command has been detected (thus there is an indication of human inattention), then activate, by way of one or more instructions from either of the uncrewed aircraft 120 or the ground pilot station 110, the onboard automated avoidance maneuver.
(21) If the data link 130 is active and either an onboard or a ground-based takeoff abort process indicates the takeoff state is within a first threshold time or distance, then reallocate control authority to both the uncrewed aircraft 120 and the ground pilot station 110 over an onboard automated aborted takeoff process. Once the takeoff state is within a second threshold (less than the first threshold) time or distance and no human command has been detected (thus there is an indication of human inattention), then activate, by way of one or more instructions from either of the uncrewed aircraft 120 or the ground pilot station 110, the onboard automated aborted takeoff process.

Note that the examples provided herein are by way of illustration rather than limitation. Various examples may implement these or other examples not explicitly set forth herein.

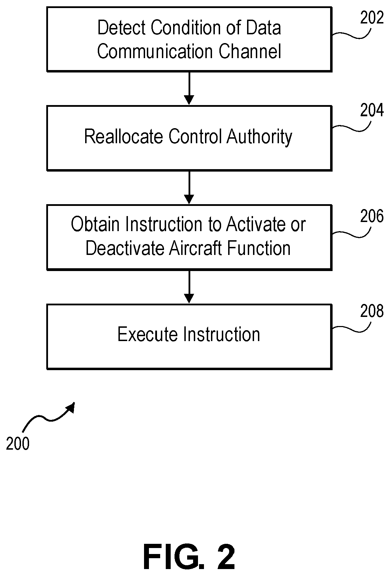

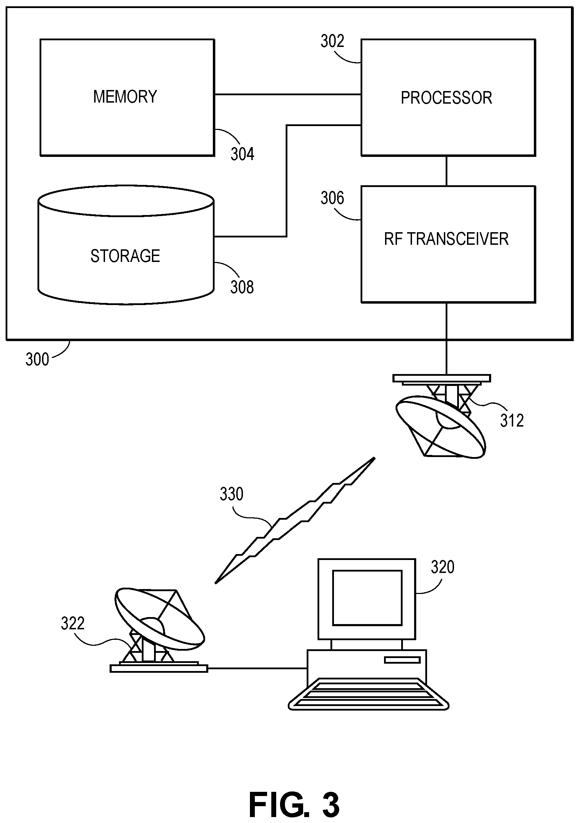

Fig. 2 is a flow diagram for a method 200 of operating a semi-autonomous aircraft according to a condition of a data communication channel. The method may reallocate a control authority over an aircraft function from the ground pilot station to the semi-autonomous aircraft, or from the semi-autonomous aircraft to the ground pilot station. The reallocation may be of one control authority over one aircraft function, or may be of multiple control authorities over corresponding multiple aircraft functions. The method 200 may be implemented in real time by a system for adaptive allocation of control authority over a function of an uncrewed aircraft based on a condition of a data link, as shown and described herein, and with non-limiting examples provided herein, in reference to Fig. 1. The method 200 may be implemented using computer hardware as shown and described herein in reference to Fig. 3, for example.

At 202, the method 200 includes detecting a condition of a data communication channel between a semi-autonomous aircraft and a ground pilot station for the semi-autonomous aircraft. The condition of the data communication channel may include a change in operational status of the data communication channel, which may include a change in an amount of loss, corruption, or interruption of data sent over the data communication channel. The condition of the data communication channel may include a change in predicted operational status of the data communication channel, which may include a predicted change in an amount of loss, corruption, or interruption of data sent over the data communication channel.

At 204, the method 200 includes reallocating a control authority for an aircraft function from one of the semi-autonomous aircraft or the ground pilot station to the other of the semi-autonomous aircraft or the ground pilot station. The reallocating may be performed in real time automatically and in response to a fulfilment of predefined criteria that include the condition of the data communication channel. The predefined criteria may include a specified phase of flight of the semi-autonomous aircraft, and/or a specified health status of a specified system of the semi-autonomous aircraft. The aircraft function may include any, or a combination, of: a hard geofence, a soft geofence, an onboard detect and avoidance process, an onboard terrain avoidance process, an onboard weather avoidance process, an onboard risk reduction maneuver process, an onboard environmental control maneuver process, an onboard diversion process, an onboard emergency or precautionary landing process, establishing an alternate communication channel, establishing an alternate communication bearer, switching to an alternate communication channel, switching to an alternate communication bearer, a takeoff rejection process, or a missed approach process.

At 206, the method 200 includes obtaining, from the other of the semi-autonomous aircraft or the ground pilot station, an instruction to activate or deactivate the aircraft function. When the instruction is obtained from the ground pilot station, it may originate from a pilot or from an algorithmic process. When the instruction is obtained from the semi-autonomous aircraft, it may be provided from one system of the semi-autonomous aircraft to another system of the semi-autonomous aircraft.

At 208, the method 200 includes executing, by the semi-autonomous aircraft, the instruction to activate or deactivate the aircraft function in response to the obtaining the instruction. Note that the execution of the instruction to activate or deactivate the aircraft function is separate from the reallocation of control authority over the aircraft function. For example, reallocation of control authority over an aircraft function does not by itself result in activation or deactivation of the aircraft function.

Fig. 3 is a schematic diagram showing uncrewed aircraft computer hardware 300 and ground pilot station computer hardware 320. In particular, Fig. 3 illustrates various hardware, software, and other resources that may be according to disclosed systems and methods. In some examples as shown, the uncrewed aircraft computer hardware 300 may include one or more processors 302 coupled to random access memory 304 operating under control of or in conjunction with an operating system. The processors 302 in some examples may be included in one or more computers or hardware resources. The operating system may be, for example, a distribution of the LinuxTM operating system, the UnixTM operating system, or other open-source or proprietary operating system or platform. The processors 302 may, in general, be programmed or configured to execute control logic and control operations to implement methods disclosed herein. The processors 302 may communicate with data store 308, such as a database stored on a hard drive or drive array, to access or store program instructions other data.

The processors 302 may further communicate via one or more radio-frequency transceiver 306, which are coupled to one or more antennas 312, such that data (e.g., a query or instruction, etc.) may be sent from the uncrewed aircraft computer hardware 300 and received by the ground pilot station computer hardware 320. This provides one direction of the data communication channel 330 between the uncrewed aircraft computer hardware 300 and the ground pilot station computer hardware 320.

The ground pilot station computer hardware 320, which may include a computer system as shown and described herein in reference to the uncrewed aircraft computer hardware 300, is communicatively coupled to one or more antennas 322 by way of one or more radio-frequency transceivers, such that data (e.g., a query or instruction, etc.) may be sent from the ground pilot station computer hardware 320 and received by the uncrewed aircraft computer hardware 300. This provides another direction of the data communication channel 330 between the uncrewed aircraft computer hardware 300 and the ground pilot station computer hardware 320.

Other configurations of the uncrewed aircraft computer hardware 300 and ground pilot station computer hardware 320 are possible. For example, according to some examples, the ground pilot station computer hardware 320 may include or be communicatively coupled to a separate ground communication system or network (e.g., one or more satellite ground stations, a mobile and/or cellular network), and data may be made available to the ground pilot station computer hardware 320 via a network (e.g., internet) or point-to-point connection.

Certain examples can be performed using a computer program or set of programs. The computer programs can exist in a variety of forms both active and inactive. For example, the computer programs can exist as software program(s) comprised of program instructions in source code, object code, executable code or other formats; firmware program(s), or hardware description language (HDL) files. Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), flash memory, and magnetic or optical disks or tapes.

Examples of the present disclosure are described herein with reference to flowchart illustrations and/or block diagrams of methods, apparatus (systems), and computer program products according to examples . It will be understood that each block of the flowchart illustrations and/or block diagrams, and combinations of blocks in the flowchart illustrations and/or block diagrams, can be implemented using computer readable program instructions that are executed by an electronic processor.

These computer readable program instructions may be provided to a processor of a general-purpose computer, special purpose computer, or other programmable data processing apparatus to produce a machine, such that the instructions, which execute via the electronic processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement features of the function/act specified in the flowchart and/or block diagram block or blocks.

In some examples, the computer readable program instructions may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the C programming language or similar programming languages. The computer readable program instructions may execute entirely on a user's computer, partly on the user's computer, as a stand-alone software package, partly on the user's computer and partly on a remote computer or entirely on the remote computer or server.

As used herein, the terms "A or B" and "A and/or B" are intended to encompass A, B, or {A and B}. Further, the terms "A, B, or C" and "A, B, and/or C" are intended to encompass single items, pairs of items, or all items, that is, all of: A, B, C, {A and B}, {A and C}, {B and C}, and {A and B and C}. The term "or" as used herein means "and/or."

As used herein, language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. § 112(f). However, for any claims containing elements designated in any other manner, it is intended that such elements are not to be interpreted under 35 U.S.C. § 112(f).

While examples have been described, those skilled in the art will be able to make various modifications to the described examples without departing from the true scope. The terms and descriptions used herein are set forth by way of illustration only and are not meant as limitations. In particular, although the method has been described by examples, the steps of the method can be performed in a different order than illustrated or simultaneously. Those skilled in the art will recognize that these and other variations are possible within the scope as defined in the following claims.

The following clauses present further examples:
Clause 1. A method (200) of operating a semi-autonomous aircraft (120) according to a condition of a data communication channel (330), the method comprising:
   detecting 202 a condition of a data communication channel between a semi-autonomous aircraft and a ground pilot station (110) for the semi-autonomous aircraft;
   reallocating 204 a control authority (150) for an aircraft function from one of the semi-autonomous aircraft or the ground pilot station to an other of the semi-autonomous aircraft or the ground pilot station, wherein the reallocating is performed automatically and in response to a fulfilment of predefined criteria comprising the condition of the data communication channel;
   obtaining 206, from the other of the semi-autonomous aircraft or the ground pilot station, an instruction to activate or deactivate the aircraft function; and
   executing 208, by the semi-autonomous aircraft, the instruction to activate or deactivate the aircraft function in response to the obtaining the instruction.
Clause 2. The method of Clause 1, wherein the reallocating comprises reallocating the control authority from the ground pilot station to the semi-autonomous aircraft.
Clause 3. The method of Clause 1 or Clause 2, wherein the reallocating comprises reallocating, automatically and in response to the detecting, a plurality of control authorities for a corresponding plurality of aircraft functions from the one of the semi-autonomous aircraft or the ground pilot station to the other of the semi-autonomous aircraft or the ground pilot station.
Clause 4. The method of any preceding Clause, wherein the condition of the data communication channel comprises a change in operational status of the data communication channel.
Clause 5. The method of Clause 4, wherein the change in operational status of the data communication channel comprises a change in an amount of loss, corruption, or interruption of data sent over the data communication channel.
Clause 6. The method of any preceding Clause, wherein the condition of the data communication channel comprises a change in predicted operational status of the data communication channel.
Clause 7. The method of Clause 6, wherein the change in operational status of the data communication channel comprises a predicted change in an amount of loss, corruption, or interruption of data sent over the data communication channel.
Clause 8. The method of any preceding Clause, wherein the aircraft function comprises at least one of:
   a hard geofence,
   a soft geofence,
   an onboard detect and avoidance process,
   an onboard terrain avoidance process,
   an onboard weather avoidance process,
   an onboard risk reduction maneuver process,
   an onboard environmental control maneuver process,
   an onboard diversion process,
   an onboard emergency or precautionary landing process,
   establishing an alternate communication channel,
   establishing an alternate communication bearer,
   switching to an established alternate communication channel,
   switching to an established alternate communication bearer,
   a takeoff rejection process, or
   a missed approach process.
Clause 9. The method of any preceding Clause, wherein the predefined criteria comprises a specified phase of flight (144) of the semi-autonomous aircraft.
Clause 10. The method of any preceding Clause, wherein the predefined criteria comprises a specified health status of a specified system (142) of the semi-autonomous aircraft.
Clause 11. A system (100) for operating a semi-autonomous aircraft (120) according to a condition of a data communication channel (330), the system comprising: at least one non-transitory computer readable medium comprising instructions; and at least one electronic processor (302) that executes the instructions to perform operations comprising:
   detecting (202) a condition of a data communication channel between a semi-autonomous aircraft and a ground pilot station for the semi-autonomous aircraft;
   reallocating (204) a control authority (150) for an aircraft function from one of the semi-autonomous aircraft or the ground pilot station to an other of the semi-autonomous aircraft or the ground pilot station, wherein the reallocating is performed automatically and in response to a fulfilment of predefined criteria comprising the condition of the data communication channel;
   obtaining (206), from the other of the semi-autonomous aircraft or the ground pilot station, an instruction to activate or deactivate the aircraft function; and
   executing (208), by the semi-autonomous aircraft, the instruction to activate or deactivate the aircraft function in response to the obtaining the instruction.
Clause 12. The system of Clause 11, wherein the reallocating comprises reallocating the control authority from the ground pilot station to the semi-autonomous aircraft.
Clause 13. The system of Clause 11 or Clause 12, wherein the reallocating comprises reallocating, automatically and in response to the detecting, a plurality of control authorities for a corresponding plurality of aircraft functions from the one of the semi-autonomous aircraft or the ground pilot station to the other of the semi-autonomous aircraft or the ground pilot station.
Clause 14. The system of any of Clauses 11 - 13, wherein the condition of the data communication channel comprises a change in operational status of the data communication channel.
Clause 15. The system of Clause 14, wherein the change in operational status of the data communication channel comprises a change in an amount of loss, corruption, or interruption of data sent over the data communication channel.
Clause 16. The system of any of Clauses 11 - 15, wherein the condition of the data communication channel comprises a change in predicted operational status of the data communication channel.
Clause 17. The system of Clause 16, wherein the change in operational status of the data communication channel comprises a predicted change in an amount of loss, corruption, or interruption of data sent over the data communication channel.
Clause 18. The system of any of Clauses 11 - 17, wherein the aircraft function comprises at least one of:
   a hard geofence,
   a soft geofence,
   an onboard detect and avoidance process,
   an onboard terrain avoidance process,
   an onboard weather avoidance process,
   an onboard risk reduction maneuver process,
   an onboard environmental control maneuver process,
   an onboard diversion process,
   an onboard emergency or precautionary landing process,
   establishing an alternate communication channel,
   establishing an alternate communication bearer,
   switching to an established alternate communication channel,
   switching to an established alternate communication bearer,
   a takeoff rejection process, or
   a missed approach process.
Clause 19. The system of any of Clauses 11 - 18, wherein the predefined criteria comprises a specified phase of flight (144) of the semi-autonomous aircraft.
Clause 20. The system of any of Clauses 11 - 19, wherein the predefined criteria comprises a specified health status of a specified system (1421) of the semi-autonomous aircraft.

## Claims

1. A method (200) of operating a semi-autonomous aircraft (120) according to a condition of a data communication channel (330), the method comprising:
detecting (202) a condition of a data communication channel between a semi-autonomous aircraft and a ground pilot station (110) for the semi-autonomous aircraft;
reallocating (204) a control authority (150) for an aircraft function from one of the semi-autonomous aircraft or the ground pilot station to another of the semi-autonomous aircraft or the ground pilot station, wherein the reallocating is performed automatically and in response to a fulfilment of predefined criteria comprising the condition of the data communication channel;
obtaining (206), from the other of the semi-autonomous aircraft or the ground pilot station, an instruction to activate or deactivate the aircraft function; and
executing (208), by the semi-autonomous aircraft, the instruction to activate or deactivate the aircraft function in response to the obtaining the instruction.

2. The method of claim 1, wherein the reallocating comprises reallocating the control authority from the ground pilot station to the semi-autonomous aircraft.

3. The method of claim 1 or claim 2, wherein the reallocating comprises reallocating, automatically and in response to the detecting, a plurality of control authorities for a corresponding plurality of aircraft functions from the one of the semi-autonomous aircraft or the ground pilot station to the other of the semi-autonomous aircraft or the ground pilot station.

4. The method of any preceding claim, wherein the condition of the data communication channel comprises a change in operational status of the data communication channel.

5. The method of claim 4, wherein the change in operational status of the data communication channel comprises a change in an amount of loss, corruption, or interruption of data sent over the data communication channel.

6. The method of any preceding claim, wherein the condition of the data communication channel comprises a change in predicted operational status of the data communication channel.

7. The method of claim 6, wherein the change in predicted operational status of the data communication channel comprises a predicted change in an amount of loss, corruption, or interruption of data sent over the data communication channel.

8. The method of any preceding claim, wherein the aircraft function comprises at least one of:
a hard geofence,
a soft geofence,
an onboard detect and avoidance process,
an onboard terrain avoidance process,
an onboard weather avoidance process,
an onboard risk reduction maneuver process,
an onboard environmental control maneuver process,
an onboard diversion process,
an onboard emergency or precautionary landing process,
establishing an alternate communication channel,
establishing an alternate communication bearer,
switching to an established alternate communication channel,
switching to an established alternate communication bearer,
a takeoff rejection process, or
a missed approach process.

9. The method of any preceding claim, wherein the predefined criteria comprises a specified phase of flight (144) of the semi-autonomous aircraft.

10. The method of any preceding claim, wherein the predefined criteria comprises a specified health status of a specified system (142) of the semi-autonomous aircraft.

11. The method of any preceding claim, wherein the method is a computer-implemented method.

12. The method of any preceding claim, wherein the semi-autonomous aircraft is one of an electric vertical takeoff and landing, a powered lift aircraft, a fixed-wing aircraft or a rotary-wing aircraft.

13. A computer program comprising instructions which, when the program is executed by a computer, cause the computer to carry out the method of any preceding claim.

14. A computer-readable storage medium comprising instructions which, when executed by a computer, cause the computer to carry out the method of any of claims 1 - 12.

15. A system (100) for operating a semi-autonomous aircraft (120) according to a condition of a data communication channel (330), the system comprising: at least one non-transitory computer readable medium comprising instructions; and at least one electronic processor (302) that executes the instructions to perform the method of any of claims 1 - 12.
